# EUROPEAN PATENT APPLICATION

(11) **EP 4 836 057 A1**
(43) Date of publication of application: **04.11.2026**
(21) Application number: 24909507.6
(22) Date of filing: 15.05.2024
(51) Int. Cl.: H01M 10/0567, H01M 10/0525, C07F 7/08

(54) **NON-AQUEOUS ELECTROLYTE AND LITHIUM-ION BATTERY**

(30) Priority: 27.12.2023 CN 202311821608
(71) Applicant: SVOLT Energy Technology Co., Ltd., Changzhou, Jiangsu 213200 (CN)
(72) Inventor: HUANG, Yuchang, hangzhou, Jiangsu 213200 (CN); QIN, Bingsheng, hangzhou, Jiangsu 213200 (CN); SHENG, Jie, hangzhou, Jiangsu 213200 (CN)
(74) Representative: Michalski Hüttermann & Partner mbB
(86) International application number: PCT/CN2024/093434
(87) International publication number: WO 2025/138540

(57) **Abstract**

A non-aqueous electrolyte and a lithium-ion battery, the non-aqueous electrolyte comprising a lithium salt, an additive, and a solvent, and the additive comprising an o-phenylene trimethylsiloxyborate compound. The provided non-aqueous electrolyte can not only solve the technical problem of the lifespan degradation of a lithium-ion battery in the prior art during cycling and storage under high-temperature conditions, but also provide good overcharge prevention capabilities to protect a battery cell.

## Description

### CROSS REFERENCE TO RELATED APPLICATION

The present disclosure claims priority to Chinese Patent Application No. 202311821608.6, filed with the China National Intellectual Property Administration on December 27, 2023, which is incorporated herein by reference in entirety.

### TECHNICAL FIELD

The present disclosure belongs to the technical field of electrolyte materials, and specifically relates to a non-aqueous electrolyte and a lithium-ion battery.

### BACKGROUND ART

With continuous development of science and technology in recent years, lithium-ion power batteries used in new energy vehicles have put forward higher demands on overall performance of the batteries. To meet requirements of electric vehicles for long driving range and wide temperature range environment, it is necessary to develop a lithium-ion secondary battery with higher energy density, better high-temperature cycling performance, and storage performance, in order to achieve a lifespan of more than 10 years for automotive power batteries.

However, lithium-ion secondary batteries with high-energy-density typically use transition metal oxide with high nickel content (e.g., lithium nickel cobalt manganese oxide) as positive electrode materials. The working voltage of the above positive electrode materials is relatively high, typically being 4.2 V-4.4 V, making them prone to problems such as interface degradation, particle breakage, and electrolyte oxidation at high temperatures and high pressures, leading to a rapid decline in cycle life of the battery at high temperatures. Therefore, it is necessary to develop electrolyte additive materials that can stably form films at high temperatures. At the same time, in order to improve safety performance of the battery, the electrolyte additives should also possess a certain overcharge prevention capability.

In recent years, from the perspective of improving charge and discharge capacity, recyclability, storage durability, overcharge safety and other performances of the batteries, many practical application studies of electrolyte additives in lithium secondary batteries have been disclosed in prior art. However, some problems still exist in an application process. Therefore, it is necessary to develop an electrolyte that can combine good high-temperature cycling performance, storage performance and safety performance.

### SUMMARY

The present disclosure provides a non-aqueous electrolyte and a lithium-ion battery. The non-aqueous electrolyte provided by the present disclosure can not only solve the technical problem of lifespan degradation of a lithium-ion batteries in the prior art during cycling and storage under high-temperature conditions, but also provide good overcharge protection capability, thereby protecting battery cells.

In the first aspect, the present disclosure provides a non-aqueous electrolyte, wherein the non-aqueous electrolyte includes a lithium salt, an additive, and a solvent, and the additive includes an o-phenylene trimethylsiloxyborate compound having a structure shown in: 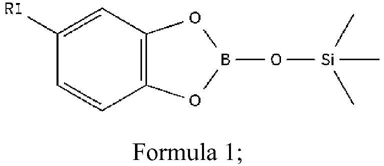 wherein R₁ is at least one selected from the group consisting of hydrogen, halogen, substituted or unsubstituted C1-C4 alkyl, substituted or unsubstituted C2-C3 alkenyl, and substituted or unsubstituted C2-C3 alkynyl.

The structure of the o-phenylene trimethylsiloxyborate compound having a structure shown in Formula 1 in the present disclosure includes two different functional groups. On the one hand, the trimethylsilyl group has a function of absorbing residual water and hydrofluoric acid in the electrolyte, reducing dissolution of the positive electrode metal atoms and self-discharge of the battery, thereby improving cycling and storage performance of the battery. On the other hand, the viscous substance formed by the phenyl group in the o-phenylene trimethylsiloxyborate compound during oxidation polymerization can block the separator, causing the battery to disconnect, thereby playing a protective role, preventing the battery from being further overcharged and causing safety hazards.

In summary, the o-phenylene trimethylsiloxyborate compound additive provided in the present disclosure not only passivates an interface of the positive electrode, forming a stable SEI protective film and reducing battery self-discharge, but also possesses excellent overcharge prevention capabilities, thereby improving the high-temperature storage performance, cycling performance, and safety performance of the battery.

In the present disclosure, the substituted or unsubstituted C1-C4 alkyl group refers to an alkyl group with 1-4 carbon atoms in the main chain, such as, 1, 2, 3, or 4.

In the present disclosure, the substituted or unsubstituted C2-C3 alkenyl group refers to an alkenyl group with 2-3 carbon atoms in the main chain, such as, 2 or 3.

In the present disclosure, the substituted or unsubstituted C2-C3 alkynyl group refers to an alkynyl group with 2-3 carbon atoms in the main chain, such as, 2 or 3.

In the present disclosure, the present disclosure further provides a preparation method for the o-phenylene trimethylsiloxyborate compound having the structure shown in Formula 1, comprising following steps:

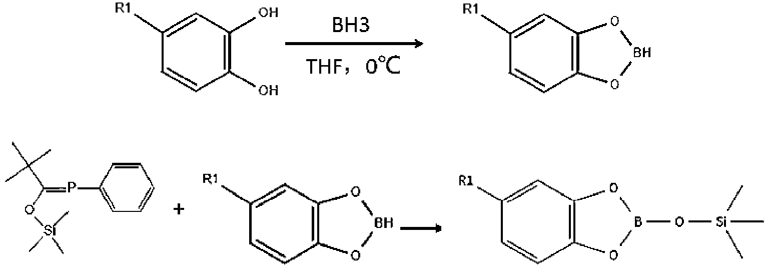

Specifically, borane and a tetrahydrofuran solution are added to a 500 mL dry flask connected to a mercury-sealed bubbling device (with a tail pipe introduced into a fume hood) in the presence of nitrogen. Under thorough stirring at 0 °C, 50 mL tetrahydrofuran solution containing catechol (also known as benzene-1,2-diol) with substituent R₁ is added dropwise within 30 min. After continuous stirring at 25 °C for 30 min, a product intermediate, catechol borane containing substituted R₁ is yielded by distillation; and
the catechol borane containing substituted R₁ is mixed with C₁₄H₂₃OPSi and methanol solvent. After heating and reacting, the methanol solvent is evaporated using a rotary evaporator, and the o-phenylene trimethylsiloxyborate compound with the structure shown in Formula 1 is obtained.

Preferably, the additive includes an o-phenylene trimethylsiloxyborate compound having a structure shown in: 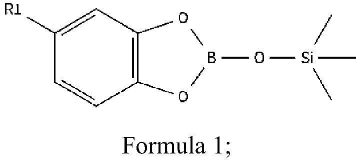 wherein R₁ is selected from the group consisting of hydrogen, fluorine, and isobutyl.

Preferably, on the basis of a total mass of the non-aqueous electrolyte as 100%, a mass percentage content of the o-phenylene trimethylsiloxyborate compound having the structure shown in Formula 1 is 0.01%-5%, preferably 0.1%-2%, such as 0.01%, 0.05%, 0.1%, 0.5%, 1.0%, 1.5%, 2.0%, 3%, 4%, or 5%.

Preferably, the additive further includes a high-temperature additive and a film-forming additive.

Preferably, the high-temperature additive includes any one or a combination of at least two selected from the group consisting of cyclic carbonate compounds containing unsaturated bonds, halogen-substituted cyclic carbonate compounds, sulfate ester compounds, sulfite ester compounds, sultone compounds, nitrile compounds, aromatic compounds, isocyanate compounds, phosphazene compounds, cyclic anhydride compounds, phosphite ester compounds, phosphate ester compounds, and borate ester compounds.

Preferably, the cyclic carbonate compounds containing unsaturated bonds include vinylene carbonate and/or vinyl ethylene carbonate.

Preferably, the halogen-substituted cyclic carbonate compounds include fluoroethylene carbonate.

Preferably, the sulfate ester compounds include ethylene sulfate.

Preferably, the sulfite ester compounds include ethylene sulfite.

Preferably, the sultone comprises 1,3-propane sultone.

Preferably, the nitrile compounds include succinonitrile and/or adiponitrile.

Preferably, the aromatic compounds include biphenyl and/or cyclohexylbenzene.

Preferably, the isocyanate compounds include 1,4-diisocyanatobutane.

Preferably, the phosphazene compounds include ethoxy(pentafluoro)cyclotriphosphazene.

Preferably, the cyclic anhydride compounds include succinic anhydride and/or maleic anhydride.

Preferably, the phosphite ester compounds include tris(trimethylsilyl) phosphite.

Preferably, the phosphate ester compounds include tris(trimethylsilyl) phosphate.

Preferably, the borate ester compounds include tris(trimethylsilyl) borate.

Preferably, on the basis of the total mass of the non-aqueous electrolyte as 100%, a mass percentage content of the high-temperature additive is 0.01%-2%, preferably 0.1%-1.5%, such as 0.01%, 0.02%, 0.05%, 0.08%, 0.1%, 0.2%, 0.5%, 0.8%, 1%, 1.2%, 1.5%, 1.8%, or 2%.

Preferably, the film-forming additive includes fluoroethylene carbonate and/or ethylene sulfate.

Preferably, on the basis of the total mass of the non-aqueous electrolyte as 100%, a mass percentage content of the fluoroethylene carbonate is 0-2%, preferably 0.2%-0.8%, such as 0%, 0.02%, 0.05%, 0.08%, 0.1%, 0.2%, 0.3%, 0.4%, 0.5%, 0.6%, 0.7%, 0.8%, 1%, 1.2%, 1.5%, 1.8%, or 2%.

Preferably, on the basis of the total mass of the non-aqueous electrolyte as 100%, a mass percentage content of the ethylene sulfate is 0-2%, preferably 0.5%-1.5%, such as, 0%, 0.02%, 0.05%, 0.08%, 0.1%, 0.2%, 0.5%, 0.7%, 0.8%, 1%, 1.2%, 1.5%, 1.8%, or 2%.

Preferably, the lithium salt includes a primary salt and an auxiliary salt.

Preferably, the primary salt includes lithium hexafluorophosphate.

Preferably, on the basis of the total mass of the non-aqueous electrolyte as 100%, a mass percentage content of the primary salt is 10%-20%, preferably 10%-15%; such as, 10%, 11%, 12%, 13%, 14%, 15%, 16%, 17%, 18%, 19%, or 20%.

Preferably, the auxiliary salt includes lithium difluorophosphate.

Preferably, on the basis of the total mass of the non-aqueous electrolyte as 100%, a mass percentage content of the auxiliary salt is 0.1%-1.5%, preferably 0.1%-1%, such as, 0.1%, 0.2%, 0.5%, 0.7%, 0.8%, 1%, 1.2%, or 1.5%.

In the present disclosure, by regulating types and contents of the primary salt and the auxiliary salt, film-forming impedance of the battery is reduced, thereby enhancing performance of the battery.

Preferably, the solvent includes a cyclic carbonate and a chain ester compound.

Preferably, the chain ester compound includes a chain carbonate and/or a chain carboxylic acid ester.

Preferably, the chain ester compound includes any one or a combination of at least two selected from the group consisting of dimethyl carbonate, diethyl carbonate, methyl ethyl carbonate, methyl propyl carbonate, ethyl propyl carbonate, methyl formate, ethyl formate, propyl formate, methyl acetate, ethyl acetate, and propyl acetate.

Preferably, the cyclic carbonate includes any one or a combination of at least two selected from the group consisting of ethylene carbonate, propylene carbonate, and butene carbonate.

Preferably, a volume ratio of the cyclic carbonate to the chain ester compound is (5-40): (60-95), such as 5:95, 8:92, 10:90, 15:85, 20:80, 25:75, 30:70, 35:65, or 40:60.

In the present disclosure, by regulating the volume ratio of the cyclic carbonate to the chain ester compound, viscosity and dielectric constant of the electrolyte can be controlled, making the conductivity value of the electrolyte the highest. If the volume ratio is too low, the dielectric constant of the electrolyte will be small and dissociation of the lithium salt will be weak. Conversely, if the volume ratio is too high, it will cause the viscosity of the electrolyte to be too high and lithium-ion transport to be difficult.

Preferably, on the basis of the total mass of the non-aqueous electrolyte as 100%, a mass percentage content of the solvent is 70%-90%, such as, 70%, 71%, 72%, 73%, 74%, 75%, 76%, 77%, 78%, 79%, 80%, 81%, 82%, 83%, 84%, 85%, 86%, 87%, 88%, 89%, or 90%.

In the second aspect, the present disclosure provides a lithium-ion battery, wherein the lithium-ion battery includes a positive electrode sheet, a negative electrode sheet, an electrolyte, and a separator, and the electrolyte includes the non-aqueous electrolyte as described in the first aspect.

Preferably, a material of the positive electrode sheet includes lithium transition metal oxide and/or lithium transition metal phosphate compound.

Preferably, the lithium transition metal oxide includes any one or a combination of at least two selected from the group consisting of LiCoO₂, LiNiₓCo_{y}MnzO₂, LiNiₓMn_{y}O₂, LiMn₂O₄, LiMnO₂, and Li₂MnO₄, wherein 0≤x≤1, 0≤y≤1, and 0≤z≤1; wherein a value of x can be 0, 0.1, 0.2, 0.3, 0.4, 0.5, 0.6, 0.7, 0.8, 0.9, or 1, a value of y can be 0, 0.1, 0.2, 0.3, 0.4, 0.5, 0.6, 0.7, 0.8, 0.9, or 1, and a value of z can be 0, 0.1, 0.2, 0.3, 0.4, 0.5, 0.6, 0.7, 0.8, 0.9, 1, etc., but is not limited to the listed values, and other unlisted values within the above ranges are also applicable.

Preferably, the lithium transition metal phosphate compound mainly includes any one or a combination of at least two selected from the group consisting of LiFePO₄, LiMnPO₄, and LiCoPO₄.

Preferably, a material of the negative electrode sheet includes any one or a combination of at least two selected from the group consisting of carbonaceous material, alloy material, and lithium metal oxide material.

Preferably, the material of the negative electrode sheet includes any one or a combination of at least two selected from the group consisting of natural graphite, artificial graphite, soft carbon, hard carbon, and lithium titanate.

Compared with the prior art, the present disclosure has following beneficial effects:
The present disclosure provides a non-aqueous electrolyte. The structure of the o-phenylene trimethylsiloxyborate compound having a structure shown in Formula 1 includes two different functional groups. On the one hand, the trimethylsilyl group has a function of absorbing residual water and hydrofluoric acid in the electrolyte, reducing dissolution of positive electrode metal atoms and self-discharge of the battery, thereby improving cycling and storage performance of the battery. On the other hand, the viscous substance formed by the phenyl group in the o-phenylene trimethylsiloxyborate compound during oxidation polymerization can block the separator, causing the battery to disconnect, thereby playing a protective role, preventing the battery from being further overcharged and causing safety hazards. In summary, the o-phenylene trimethylsiloxyborate compound additive provided in present disclosure can not only passivate the interface of the positive electrode, forming a stable SEI protective film, reducing battery self-discharge, but also have excellent overcharge prevention capabilities, thereby improving the high-temperature storage performance, cycling performance, and safety performance of the battery.

### DETAILED DESCRIPTION OF EMBODIMENTS

The technical solution of the present disclosure will be further described below through specific embodiments. Those skilled in the art should understand that the embodiments are merely intended to assist in understanding the present disclosure and should not be regarded as specific limitations on the present disclosure.

### Example 1

The present example provided a non-aqueous electrolyte, and the non-aqueous electrolyte included lithium hexafluorophosphate, an additive, and a solvent. The additive included an o-phenylene trimethylsiloxyborate compound having a structure shown in Formula 1-1, fluorovinylene carbonate, ethylene sulfate, and lithium difluorophosphate.

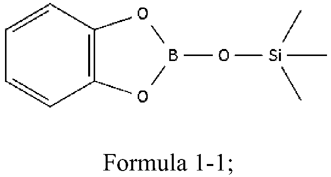

The present example provided a synthetic route for the above o-phenylene trimethylsiloxyborate compound having the structure shown in Formula 1-1, including following steps:

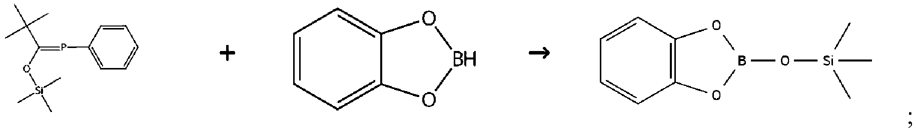

Specifically, equal amounts of C₁₄H₂₃OPSi and C₆H₅BO₂ and methanol solvent were added to and mixed in a round-bottomed flask, and the temperature was heated to 55 °C with continuous stirring for 2 h. Then, the methanol solvent was evaporated using a rotary evaporator, and the o-phenylene trimethylsiloxyborate compound having the structure shown in Formula 1-1 can be obtained.

On the basis of the total mass of the non-aqueous electrolyte as 100%, the mass percentage content of lithium hexafluorophosphate was 12.5%. The mass percentage content of the o-phenylene trimethylsiloxyborate compound having the structure shown in Formula 1-1 was 0.5%, the mass percentage content of fluorovinylene carbonate was 0.5%, the mass percentage content of ethylene sulfate was 1%, and the mass percentage content of lithium difluorophosphate was 1%. The mass percentage content of the solvent was 84.5%, and the specific composition included ethylene carbonate, methyl ethyl carbonate and dimethyl carbonate in a mass ratio of 30:50:20.

The present example further provided a preparation method for the above non-aqueous electrolyte, including following steps:

In a condition of an oxygen content < 0.1 ppm and a water content < 0.1 ppm, the above components are mixed according to the formula amounts, and after stirring evenly, the non-aqueous electrolyte was obtained.

### Example 2

The present example provided a non-aqueous electrolyte, and the non-aqueous electrolyte included lithium hexafluorophosphate, an additive, and a solvent. The additive included o-phenylene trimethylsiloxyborate compounds with the structure shown in Formula 1-2, fluorovinylene carbonate, ethylene sulfate, and lithium difluorophosphate.

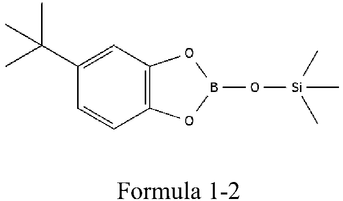

The present example provided a synthetic route for the above o-phenylene trimethylsiloxyborate compound having the structure shown in Formula 1-2, including following steps:

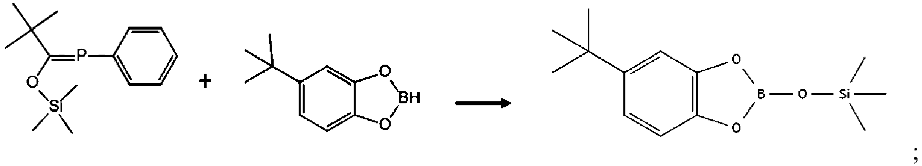

Specifically, equal amounts of C₁₄H₂₃OPSi andC₁₀H₁₃BO₂ and methanol solvent were added to and mixed in a round-bottomed flask, and the temperature was heated to 55 °C with continuous stirring for 2 h. Then, the methanol solvent was evaporated using a rotary evaporator, and the o-phenylene trimethylsiloxyborate compound having the structure shown in Formula 1-2 was obtained.

On the basis of the total mass of the non-aqueous electrolyte as 100%, the mass percentage content of lithium hexafluorophosphate was 12.5%. The mass percentage content of the o-phenylene trimethylsiloxyborate compound with the structure shown in Formula 1-2 was 0.5%, the mass percentage content of fluorovinylene carbonate was 0.5%, the mass percentage content of ethylene sulfate was 1%, and the mass percentage content of lithium difluorophosphate was 1%. The mass percentage content of the solvent was 84.5%, and specific composition included ethylene carbonate, methyl ethyl carbonate and dimethyl carbonate in a mass ratio of 30:50:20.

The preparation method of the non-aqueous electrolyte in the present example was the same as that in Example 1.

### Example 3

The difference between the present example and Example 1 was that, on the basis of the total mass of the non-aqueous electrolyte as 100%, the mass percentage content of lithium hexafluorophosphate was 15%; the mass percentage content of the o-phenylene trimethylsiloxyborate compound having the structure shown in Formula 1-1 was 0.5%, the mass percentage content of fluorovinylene carbonate was 1%, the mass percentage content of ethylene sulfate was 0.1%, the mass percentage content of lithium difluorophosphate was 0.4%, and the mass percentage content of the solvent was 83%. Specific composition included ethylene carbonate, methyl ethyl carbonate, and dimethyl carbonate in a mass ratio of 30:50:20. The rest was the same as in Example 1.

### Example 4

The difference between the present example and Example 1 was that, on the basis of the total mass of the non-aqueous electrolyte as 100%, the mass percentage content of lithium hexafluorophosphate was 10%; the mass percentage content of the o-phenylene trimethylsiloxyborate compound having the structure shown in Formula 1-1 was 0.5%, the mass percentage content of fluorovinylene carbonate was 1%, the mass percentage content of ethylene sulfate was 1%, the mass percentage content of lithium difluorophosphate was 1%, and the mass percentage content of the solvent was 86.5%. Specific composition included ethylene carbonate, methyl ethyl carbonate, and dimethyl carbonate in a mass ratio of 30:50:20. The rest was the same as in Example 1.

### Example 5

The difference between the present example and Example 1 was that fluoroethylene carbonate was replaced with an equal amount of vinylene carbonate. The rest was the same as in Example 1.

### Example 6

The difference between the present example and Example 1 was that the composition of the solvent included ethylene carbonate and diethyl carbonate in a volume ratio of 1:9. The rest was the same as in Example 1.

### Example 7

The difference between the present example and Example 1 was that the o-phenylene trimethylsiloxyborate compound having the structure shown in Formula 1-1 was replaced with an equal amount of o-phenylene trimethylsiloxyborate compound having the structure shown in Formula 1-3. The rest was the same as in Example 1.

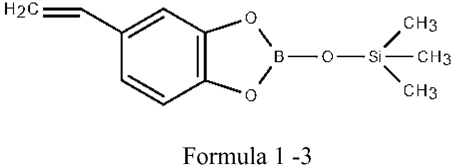

### Example 8

The difference between the present example and Example 1 was that lithium difluorophosphate was replaced with an equal amount of lithium hexafluorophosphate. The rest was the same as in Example 1.

### Example 9

The difference between the present example and Example 1 was that fluorovinylene carbonate, ethylene sulfate, and lithium difluorophosphate were all replaced with equal amounts of o-phenylene trimethylsiloxyborate compounds having the structure shown in Formula 1-1. The rest was the same as in Example 1.

### Comparative Example 1

The difference between the present comparative example and Example 1 was that no o-phenylene trimethylsiloxyborate compounds having the structure shown in Formula 1-1 were added, and the solvent content was adjusted to make mass percentage content of the total system was 100%. The rest was the same as in Example 1.

### Comparative Example 2

The difference between the present comparative example and Example 1 was that the o-phenylene trimethylsiloxyborate compound having the structure shown in Formula 1-1 was replaced with an equal amount of fluoroethylene carbonate. The rest was the same as in Example 1.

### Comparative Example 3

The difference between the present comparative example and Example 1 was that the o-phenylene trimethylsiloxyborate compound having the structure shown in Formula 1-1 was replaced with an equal amount of tris(trimethylsilane)borate ester. The rest was the same as in Example 1.

### Application Example 1 to Application Example 9 and Comparative Application Example 1 to Comparative Application Example 3

Lithium-ion batteries were prepared by using the non-aqueous electrolytes provided in Example 1 to Example 9 and Comparative Example 1 to Comparative Example 3, and a preparation method was as follows:

Preparation of positive electrode sheet: the positive electrode active material lithium nickel cobalt manganese oxide (LiNi_{0.8}Co_{0.1}Mn_{0.1}O₂), the conductive agent Super-P, and the adhesive PVDF were dissolved in the solvent N-methylpyrrolidone in a mass ratio of 95.8:2.2:2.0 and mixed uniformly to obtain a positive electrode slurry. Then, the positive electrode slurry was evenly coated on the current collector aluminum foil with a coating amount of 18 mg/cm². After drying at 90 °C, cold pressing, edge cutting, sheet cutting and slitting were performed, followed by drying under a vacuum condition at 90 °C for 4 h, and electrode tabs were welded to produce a positive electrode sheet of lithium-ion secondary batteries that meet requirements.

Preparation of negative electrode sheets: the negative electrode active material artificial graphite, the conductive agent Super -P, the thickener CMC and the adhesive SBR were dissolved in the solvent, deionized water, in a mass ratio of 96.5:1.0:1.0:1.5 and mixed uniformly to obtain a negative electrode slurry. Then, the negative electrode slurry was evenly coated on the current collector copper foil with a coating amount of 8.9 mg/cm². After drying at 90 °C, cold pressing, edge cutting, sheet cutting and slitting were performed, followed by drying under vacuum at 110 °C for 4 h, and electrode tabs were welded to produce a negative electrode sheet of lithium-ion secondary batteries that meet requirements.

Preparation of lithium-ion batteries: the positive electrode sheet and the negative electrode sheet of the lithium-ion secondary battery prepared according to the above-mentioned process, and polyethylene separator were fabricated into a battery with a thickness of 8 mm, a width of 60 mm and a length of 130 mm through a lamination process. Then, the battery was vacuum-baked at 90 °C for 10 h, injected with the non-aqueous electrolyte in the Examples and the Comparative Examples, and left to stand for 24 h, followed by charging at a constant current of 0.1 C (200 mA) to 4.4 V, and then charging at a constant voltage of 4.4 V until a current dropped to 0.05 C (100 mA), and then discharging at a constant current of 0.1 C (200 mA) to 2.8 V. The charge/discharge cycle were repeated twice. Finally, charging at a constant current of 0.1 C (200 mA) to 3.8 V was performed, and the preparation of the lithium-ion battery was completed.

### Testing conditions

The lithium-ion batteries provided in Application Example 1 to Application Example 9 and Comparative Application Example 1 to Comparative Application Example 3 were tested. Test methods were as follows:

### High-temperature storage performance test of lithium-ion secondary batteries:

At 25 °C, the lithium-ion secondary batteries prepared in Application Example 1 to Application Example 9 and Comparative Application Example 1 to Comparative Application Example 3 were first charged to 4.35 V at a constant current of 0.05 C, and then further charged to a current of 0.05 C at a constant voltage of 4.35 V. Then, the lithium-ion secondary batteries were discharged to 2.8 V at a constant current of 0.5 C. The discharge capacity of this cycle was recorded as the discharge capacity of the lithium-ion secondary battery before high-temperature storage. Then the lithium-ion secondary batteries were charged to 4.35 V at a constant current of 0.5 C, and stored at 60 °C for 30 days. After the storage was completed, the lithium-ion secondary batteries were placed in an environment of 25 °C, and then discharged to 2.8 V at a constant current of 0.5 C. Then, the lithium-ion secondary batteries were charged to 4.35 V at a constant current of 0.5 C, further charged to a current of 0.05 C at a constant voltage of 4.35 V, and then discharged to 2.8 V at a constant current of 0.5 C. The final discharge capacity was recorded as the discharge capacity of the lithium-ion secondary battery after high-temperature storage. Capacity retention rate (%) of lithium-ion secondary batteries after high-temperature storage = [Discharge capacity of lithium-ion secondary batteries after high-temperature storage/Discharge capacity of lithium-ion secondary batteries before high-temperature storage] × 100%.

### High-Temperature Cycling Performance Testing of Lithium-ion Secondary Batteries:

The high-temperature cycling performance of lithium-ion secondary batteries prepared for Application Example 1 to Application Example 9 and Comparative Application Example 1 to Comparative Application Example 3 was tested. Specific method was as follows: At 45 °C, the lithium-ion secondary batteries were first charged to 4.35 V at a constant current of 0.5 C, then charged to a cutoff current of 0.05 C at a constant voltage of 4.35 V, and then were discharged to 2.8 V at a constant current of 0.5 C. This constitutes one charge/discharge cycle, and the discharge capacity of this cycle was recorded as the discharge capacity of the first cycle. The lithium-ion secondary batteries were subjected to the above charge-discharge cycle test, and the discharge capacity of the 800th cycle was recorded. Capacity retention rate (%) of lithium-ion secondary battery after 800 cycles = [Discharge capacity of the 800th cycle / Discharge capacity of the first cycle] × 100%.

### High-temperature storage gas generation performance test of lithium-ion secondary batteries:

At 25 °C, lithium-ion secondary batteries prepared in Application Example 1 to Application Example 9 and Comparative Application Example 1 to Comparative Application Example 3 were first charged to 4.35 V at a constant current of 0.5 C, and then further charged to a current cutoff of 0.05 C at a constant voltage of 4.35 V. Next, the lithium-ion secondary batteries were discharged to 2.8 V at a constant current of 0.5 C. The discharge capacity of this cycle was recorded as the discharge capacity of the lithium-ion secondary batteries before high-temperature storage. Then, the lithium-ion secondary batteries were charged to 4.35 V at a constant current of 0.5 C, and then charged to a current cutoff of 0.05 C at a constant voltage of 4.35 V, thereby the lithium-ion batteries were fully charged. The volume of the battery was tested using a water displacement method, and the thickness of the battery was measured using a micrometer.

The lithium-ion batteries were then stored at 60 °C for 30 days. After the storage was completed, the lithium-ion secondary batteries were placed in an environment of 25 °C, and the volume of the batteries were tested using the water displacement method. Specifically, a beaker filled with pure water was first placed on a balance and weighed, recorded as reading 1. Then, the battery before storage (fresh battery) or the battery after storage was immersed in the water in the beaker and weighed, recorded as reading 2. Reading 2 minus reading 1 gives the volume of the battery before storage (fresh battery) or after storage. Since the density of water is 1 mg/mL, reading 1 mL corresponds to the volume of the battery before storage (fresh battery) or after storage being 1 mL. Therefore, when the battery immersed in water represents the battery before storage, reading 2 minus reading 1 gives the volume of the battery before storage. When the battery immersed in water represents the battery after storage, reading 2 minus reading 1 gives the volume of the battery after storage. The volume after storage divided by the volume before storage is the ratio of the volume of the battery after storage to the volume before storage. The thickness of the battery was measured using a micrometer. Then, the lithium-ion secondary batteries were discharged to 2.8 V at a constant current of 0.5 C, then charged to 4.35 V at a constant current of 0.5 C, then further charged to a current of 0.05 C at a constant voltage of 4.35 V. After that the lithium-ion secondary batteries were discharged to 2.8 V at a constant current of 0.5 C. The final discharge capacity was the discharge capacity of the lithium-ion secondary battery after high-temperature storage. Battery volume expansion rate (%) = (Volume after storage/Volume before storage - 1) ×100%.

Test results are shown in Table 1:

**Table 1**

| | Storage Capacity Retention Rate (%) | Cycling Capacity Retention Rate (%) | Gas Generation Expansion Rate at 55 °C/30 days (%) |
|---|---|---|---|
| Application Example 1 | 95 | 95 | 10 |
| Application Example 2 | 88 | 86 | 40 |
| Application Example 3 | 92 | 89 | 38 |
| Application Example 4 | 93 | 92 | 22 |
| Application Example 5 | 92 | 90 | 13 |
| Application Example 6 | 89 | 88 | 35 |
| Application Example 7 | 86 | 85 | 45 |
| Application Example 8 | 94 | 91 | 20 |
| Application Example 9 | 90 | 88 | 32 |
| Comparative Example 1 | 82 | 83 | 50 |
| Comparative Example 2 | 80 | 81 | 52 |
| Comparative Example 3 | 85 | 84 | 48 |

As shown in Table 1, the battery provided in Application Example 1 of the present disclosure exhibits optimal high-temperature cycling performance and high-temperature storage performance.

As can be seen from Application Example 1, Application Example 5, and Application Example 6, by controlling the volume ratio of the solvent as well as the types and contents of the high-temperature additive and the film-forming additive, the lithium-ion secondary battery achieves superior high-temperature performance.

As can be seen from Application Examples 1 and 8, by controlling the types and contents of the primary salt and the auxiliary salt, the film-forming impedance of the battery is reduced, thereby improving battery performance.

From the comparison among Application Example 1, Comparative Application Example 1, and Comparative Application Example 2, it can be observed that, compared to the battery without the addition of the o-phenylene trimethylsiloxyborate compound, the addition of the o-phenylene trimethylsiloxyborate increases the capacity retention rate of the lithium-ion secondary battery stored at 55 °C, reduces gas generation during storage, and consequently improves the cycle capacity retention rate.

As can be seen from Application Example 1 and Comparative Application Example 3 that conventional tris(trimethylsilane)borate esters cannot achieve the technical effects of the o-phenylene trimethylsiloxyborate compound in the present disclosure.

The applicant declares that the present disclosure illustrates the process method through the above embodiments, but the present disclosure is not limited to the above process steps, i.e., it does not mean that the present disclosure must rely on the above process steps to be implemented. Those skilled in the art should understand that any improvements to the present disclosure, equivalent substitutions of the raw materials used in the present disclosure, additions of auxiliary components, and selection of specific methods, etc., all fall within the scope of protection and disclosure of the present disclosure.

## Claims

1. A non-aqueous electrolyte, comprising a lithium salt, an additive, and a solvent, wherein the additive comprises an o-phenylene trimethylsiloxyborate compound having a structure shown in: 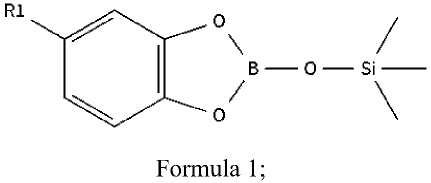 wherein R₁ is at least one selected from the group consisting of hydrogen, halogen, substituted or unsubstituted C1-C4 alkyl, substituted or unsubstituted C2-C3 alkenyl, and substituted or unsubstituted C2-C3 alkynyl.

2. The non-aqueous electrolyte according to claim 1, wherein the additive comprises an o-phenylene trimethylsiloxyborate compound having a structure shown in: 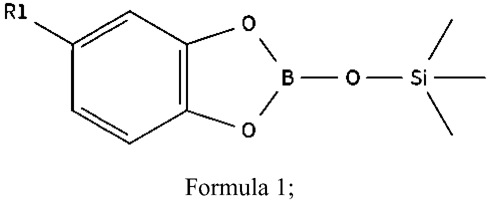 wherein, R₁ is selected from the group consisting of hydrogen, fluorine, and isobutyl.

3. The non-aqueous electrolyte according to claim 1 or 2, wherein on the basis of a total mass of the non-aqueous electrolyte as 100%, a mass percentage content of the o-phenylene trimethylsiloxyborate compound having the structure shown in Formula 1 is 0.01%-5%, preferably 0.1%-2%.

4. The non-aqueous electrolyte according to any one of claims 1 to 3, wherein the additive further comprises a high-temperature additive and a film-forming additive;
preferably, the high-temperature additive comprises any one or a combination of at least two selected from the group consisting of cyclic carbonate compounds containing unsaturated bond, halogen-substituted cyclic carbonate compounds, sulfate ester compounds, sulfite ester compounds, sultone compounds, nitrile compounds, aromatic compounds, isocyanate compounds, phosphazene compounds, cyclic anhydride compounds, phosphite ester compounds, phosphate ester compounds, and borate ester compounds;
preferably, the cyclic carbonate compounds containing unsaturated bonds comprise vinylene carbonate and/or vinyl ethylene carbonate;
preferably, the halogen-substituted cyclic carbonate compounds comprise fluoroethylene carbonate;
preferably, the sulfate ester compounds comprise ethylene sulfate;
preferably, the sulfite ester compounds comprise ethylene sulfite;
preferably, the sultone compounds comprise 1,3-propane sultone;
preferably, the nitrile compounds comprise succinonitrile and/or adiponitrile;
preferably, the aromatic compounds comprise biphenyl and/or cyclohexylbenzene; preferably, the isocyanate compounds comprise 1,4-diisocyanatobutane;
preferably, the phosphazene compounds comprise ethoxy(pentafluoro)cyclotriphosphazene;
preferably, the cyclic anhydride compounds comprise succinic anhydride and/or maleic anhydride;
preferably, the phosphite ester compounds comprise tris(trimethylsilyl) phosphite;
preferably, the phosphate ester compounds comprise tris(trimethylsilyl) phosphate;
preferably, the borate ester compounds comprise tris(trimethylsilyl) borate; and
preferably, on the basis of the total mass of the non-aqueous electrolyte as 100%, a mass percentage content of the high-temperature additive is 0.01%-2%, preferably 0.1%-1.5%.

5. The non-aqueous electrolyte according to claim 4, wherein the film-forming additive comprises fluoroethylene carbonate and/or ethylene sulfate;
preferably, on the basis of the total mass of the non-aqueous electrolyte as 100%, a mass percentage content of the fluoroethylene carbonate is 0-2%, preferably 0.2%-0.8%; and
preferably, on the basis of the total mass of the non-aqueous electrolyte as 100%, a mass percentage of the ethylene sulfate is 0-2%, preferably 0.5%-1.5%.

6. The non-aqueous electrolyte according to any one of claims 1 to 5, wherein the lithium salt comprises a primary salt and an auxiliary salt;
preferably, the primary salt comprises lithium hexafluorophosphate;
preferably, on the basis of the total mass of the non-aqueous electrolyte as 100%, a mass percentage content of the primary salt is 10%-20%, preferably 10%-15%;
preferably, the auxiliary salt comprises lithium difluorophosphate; and
preferably, on the basis of the total mass of the non-aqueous electrolyte as 100%, a mass percentage content of the auxiliary salt is 0.1%-1.5%, preferably 0.1%-1%.

7. The non-aqueous electrolyte according to any one of claims 1 to 6, wherein the solvent comprises a cyclic carbonate and a chain ester compound;
preferably, the chain ester compound comprises a chain carbonate and/or a chain carboxylic acid ester;
preferably, the chain ester compound comprises any one or a combination of at least two selected from the group consisting of dimethyl carbonate, diethyl carbonate, methyl ethyl carbonate, methyl propyl carbonate, ethyl propyl carbonate, methyl formate, ethyl formate, propyl formate, methyl acetate, ethyl acetate, and propyl acetate;
preferably, the cyclic carbonate comprises any one or a combination of at least two selected from the group consisting of ethylene carbonate, propylene carbonate, and butene carbonate;
preferably, a volume ratio of the cyclic carbonate to the chain ester compound is (5-40): (60-95); and
preferably, on the basis of the total mass of the non-aqueous electrolyte as 100%, a mass percentage content of the solvent is 70%-90%.

8. A lithium-ion battery, comprising a positive electrode sheet, a negative electrode sheet, an electrolyte, and a separator, wherein the electrolyte comprises the non-aqueous electrolyte according to any one of claims 1 to 7.

9. The lithium-ion battery according to claim 8, wherein a material of the positive electrode sheet comprises lithium transition metal oxide and/or lithium transition metal phosphate compound;
preferably, the lithium transition metal oxide comprises any one or a combination of at least two selected from the group consisting of LiCoO₂, LiNiₓCo_{y}Mn_{z}O₂, LiNiₓMn_{y}O₂, LiMn₂O₄, LiMnO₂, and Li₂MnO₄, wherein 0≤x≤1, 0≤y≤1, 0≤z≤1; and
preferably, the lithium transition metal phosphate compound mainly comprises any one or a combination of at least two selected from the group consisting of LiFePO₄, LiMnPO₄, and LiCoPO₄.

10. The lithium-ion battery according to claim 8 or 9, wherein a material of the negative electrode sheet comprises any one or a combination of at least two selected from the group consisting of carbonaceous material, alloy material, and lithium metal oxide material; and
preferably, the material of the negative electrode sheet comprises any one or a combination of at least two selected from the group consisting of natural graphite, artificial graphite, soft carbon, hard carbon, and lithium titanate.
